# EUROPEAN PATENT SPECIFICATION

(11) **EP 3 233 301 B1**
(45) Date of publication and mention of the grant of the patent: **14.04.2021**
(21) Application number: 15830833.8
(22) Date of filing: 21.12.2015
(51) Int. Cl.: B05B 1/16, B05B 7/24, B01F 5/04, B25F 3/00

(54) **LIQUID DISCHARGE DEVICE**
FLÜSSIGKEITSAUSSTOSSVORRICHTUNG
DISPOSITIF D'ÉVACUATION DE LIQUIDE

(30) Priority: 19.12.2014 IT PN20140067
(43) Date of publication of application: 25.10.2017
(73) Proprietor: Marino, Daniele, 31095 Conegliano (IT)
(72) Inventor: Marino, Daniele, 31095 Conegliano (IT)
(74) Representative: Kraus & Weisert Patentanwälte PartGmbB
(86) International application number: PCT/IB2015/002411
(87) International publication number: WO 2016/097853

(56) References cited:
- EP-A1- 0 468 081
- EP-A2- 0 443 399
- WO-A1-91/14517
- CA-A1- 2 165 241
- CN-Y- 200 999 036
- US-A- 5 421 520
- US-A1- 2008 257 988
- US-A1- 2009 045 271
- US-A1- 2012 223 160

## Description

This invention refers to a device for discharging a liquid under pressure, for example a pressure washer or sprayer, with advantageous usage and portability characteristics. Some embodiments of this invention also refer to a device without a power generator, which by the nature of how it is built becomes a pressure washer or (possibly high-pressure) sprayer when mechanically fastened to an external power generator, the nature of which may vary.

In some embodiments of this invention, transforming a device designed and built for other purposes creates a cleaning device using a jet of water (possibly high pressure), with the possible addition of detergent stored in a tank. More generally, the device referred to in the present invention may allow low-pressure spraying or high-pressure cleaning, and in some embodiments disinfestation or cleaning by incorporating a tank containing the appropriate chemical products.

### PRIOR ART

Pressure washers and sprayers are machines which, in summary, are composed of a power generator, a pressure generator (for example a high-pressure pump), and a flexible line connected to a pistol attached to a lance, from which the jet of water or other liquid is discharged. All the mechanical and non-mechanical components, with the exception of the flexible line/pistol and lance assembly, are intrinsically connected in a permanent manner inside a single structure with various geometric configurations. Portable pressure washers or sprayers are also intrinsically connected in a permanent manner inside a single structure which can take on various geometric configurations.

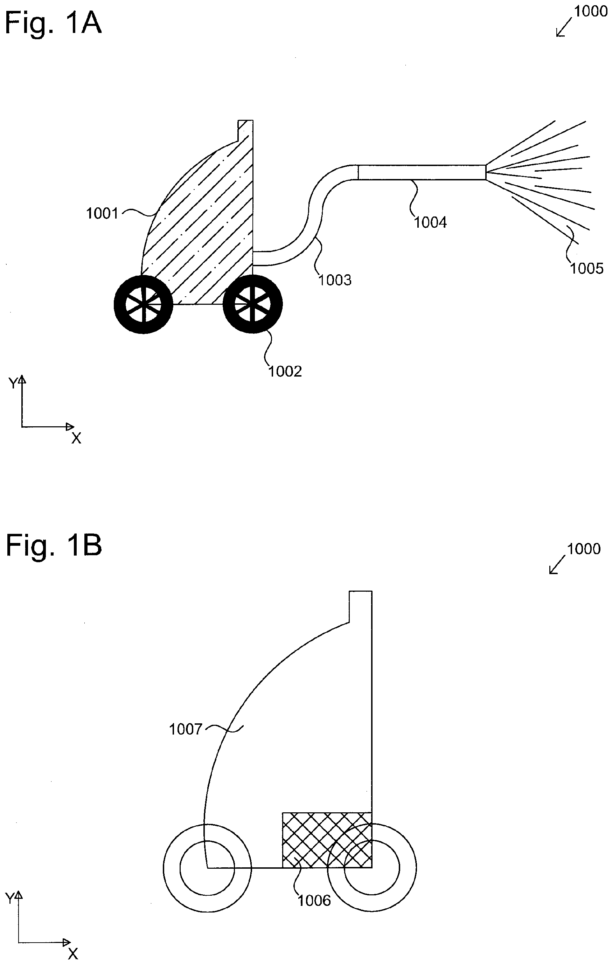

Figure 1A illustrates a schematic side view of a pressure washer 1000, according to the state of the art. Specifically, the pressure washer 1000 is composed of a body 1001, wheels 1002, a lance 1004, connected to the body 1001 via a hose 1003, and generating a jet of water 1005. Although the wheels 1002 allow movement of the pressure washer 1000, the pressure washer 1000 is nevertheless not ideally suited for use while moving. Specifically, a user who intends to use the pressure washer 1000 while moving will be required to move the pressure washer 1000 continuously. It is possible to move the pressure washer 1000 by pulling the hose 1003, however this method of use tends to damage the hose and/or its connections to the body 1001 and/or the lance 1004, and provides poor usage ergonomics.

Figure 1B illustrates a schematic section view of the pressure washer 1000. As this illustration shows, the body 1001 comprises a motor-pump assembly 1006 and a container for liquid 1007. This configuration presents numerous disadvantages. In particular, the user is required to continually move a mass of liquid sufficient for prolonged use, with the corresponding weight. In the event that the pressure washer 1000 is used to wash a vehicle, the user will be required to continuously move around the vehicle body, and the continual need to move the body 1001 will significantly slow down the operation, which becomes inconvenient and tiresome for the user.

Moreover, the positioning of the motor-pump assembly 1006 inside the body 1000 generally leads to unsatisfactory performance from the pressure washer 1000. Specifically, the motor-pump assembly 1006 generally operates in a manner which maintains pressure inside the hose 1003 at all times. More precisely, this static overpressure is also present in the event that the user is not actually using the pressure washer 1000, for example when the user is moving the pressure washer 1000 towards another area in which it is to be used. In this situation, the pressure inside the hose 1003 reduces the flexibility of the hose 1003 and therefore limits the user's ability to position the lance 1004. Moreover, the presence of the above-mentioned pressure makes it difficult for the user to wind the hose 1003 to prevent the hose 1003 blocking the wheels 1002 during positioning of the pressure washer 1000. Finally, the distance of the motor-pump assembly 1006 from the lance 1004 leads to standing water in the hose 1003 after use of the pressure washer 1000. This standing water can lead to bad smells and/or hygiene problems in the event that the pressure washer 1000 is not used for an extended period. In addition, this standing water means that the pressure washer 1000 cannot safely be kept in an environment where the temperature may fall below 0°C, like a garage or outdoor tool shed.

Sprayers, for example those used for watering a garden, also present the same problems described above. Specifically, the problem of having to move a considerable mass of water is further worsened in the case of a sprayer, which generally uses greater quantities of water than a pressure washer.

The method of construction of these types of machine also makes their use exclusive, in other words they cannot be physically joined together and they cannot share other devices for different functions for which they were designed. The state of the art does not include devices which, by the effect of the present invention, can share the same source of mechanical power and other devices, allowing combined use and in this manner being transformed into power washers or sprayers, thus performing different functions for which they were individually designed.

Devices for discharging liquids in accordance with the prior art are known, for instance, from documents US 5 421 520 A, CA 2 165 241 A1, EP 0 468 081 A1, CN 200 999 036 Y, US 2008/257988 A1, US 2009/045271 A1, EP 0 443 399 A2, US 2012/223160 A1 and WO 91/14517 A1.

### OBJECT OF THE PRESENT INVENTION

An object of the present invention is to supply a device for discharging a liquid under pressure, for example a pressure washer or sprayer, which offers an advantageous flexibility in its use.

A further possible object of the present invention is to create a device for discharging a pressurised liquid in a compact and/or lightweight and/or low-cost manner.

Another possible object of the present invention is to improve on the current methods of use of pressure washers and/or (high-pressure) sprayers, which as is well known are limited in their manoeuvrability due to the large number of flexible components, for example the water supply hose, the high-pressure hose attached to the lance and the electricity cable in the specific cases, which must be connected to them for their operation. These elements limit the user's freedom of movement during use.

In some embodiments, the present invention can increase manoeuvrability and ease of handling, since the transformation obtained by the connection of the power generator, for example a handheld string trimmer, and the invention can generate a pressure washer and/or sprayer whose operation will depend on a single fixed restriction, consisting only of the water supply line.

### SUMMARY OF THE INVENTION

The objects described above are achieved, at least in part, by a device for the discharge of a pressurised liquid, according to claim 1. Further advantageous forms of the present invention are described by the dependent claims.

In one aspect, the invention refers to a device for the discharge of a pressurised liquid comprising: a liquid intake section, a liquid discharge lance, a pump, which can be connected to a motor, the pump having an inlet connected to the intake section and an outlet connected to the discharge lance, where the discharge lance and the pump are connected by a connection with at most three rotational degrees of freedom and/or one translational degree of freedom. This allows the creation of a highly manageable device.

In some embodiments, the connection may comprise a rotating joint and/or a ball joint and/or a sliding joint. This embodiment allows the creation of a connection with one, two or three rotational degrees of freedom and/or one translational degree of freedom.

In some embodiments, the connection may comprise fastening elements, preferably screws and/or adhesive and/or welds and/or bolts and/or rivets, and/or an interlocking coupling. This embodiment allows the creation of a connection with zero degrees of freedom.

In some embodiments, the pump, the lance and possibly the motor and/or any transmission component nearest the pump can be positioned substantially along a single axis of the device. This embodiment allows the creation of a compact and manageable device.

In some embodiments, the device may not include a liquid container, and the liquid intake section may be connectable to a hose. This embodiment allows the weight due to the liquid in the container to be avoided.

In some embodiments, where the motor may comprise a motor body, the pump may comprise a pump body and it may be possible to connect and/or remove the pump by coupling and/or decoupling the motor body and pump body. This embodiment allows an external motor to be used as the motor, which may be shared with devices of another type.

In some embodiments, the pump body and/or motor body may comprise a locking device to prevent decoupling of the motor body from the pump body. This embodiment makes it possible to prevent accidental decoupling of the motor body from the pump body.

In some embodiments, the device may also comprise a motor control device to control the power output from the motor. This embodiment allows the discharge pressure to be controlled via the motor control, instead of having to use pressure modulation.

In some embodiments the device may also comprise a tank for a second liquid, preferably a liquid detergent or a liquid to be applied to plants. This embodiment allows the second liquid to be mixed with the pressurised liquid, while still keeping the device compact and lightweight.

In some embodiments the tank can be positioned at least partially above or below a mixing section, in the usage position. Thanks to this embodiment the device is kept compact, with a balanced weight.

In some embodiments, the device may also comprise a motor. This embodiment allows the device to be made more compact, as it does not require connection to an external motor. In some embodiments, the motor may be a motor for multiple gardening tools, which can be separated from the pump. This embodiment allows a single motor to be shared between multiple devices.

In the invention, the device also comprises an outlet check valve with a first position and a second position, wherein in the first position the outlet check valve is open, and wherein in the second position the outlet check valve can be opened if a pressure greater than a predetermined threshold is applied to its intake. This makes it possible to use the device both with a supply of liquid under pressure, and by drawing a liquid from a container.

In some embodiments, the device can also comprise a liquid distribution duct, extended to the periphery of the pump. This embodiment allows cooling of the pump to be performed.

In some embodiments, the device can also include at least one intake valve and one outlet valve, positioned radially in the pump. This embodiment allows for a compact pump shape and an advantageous distribution of the forces acting on the valves due to the pressure.

A further aspect may refer to an interchangeable device comprising a high-pressure pump unit, a water intake, a liquid tank and a lance, comprising a coupling system comprising a shaped shaft-shaped hub coupling, an anti-rotation positioning element and a locking clamp, where the coupling system allows a power generator of varying type to be coupled, making the device a pressure washer and/or high-pressure sprayer. This allows an external motor to be used with the device for discharging a pressurised liquid.

In some aspects, the lance, possibly multi-way, may not feature a hose and may be directly connected to a single structure formed of: the water intake, the high-pressure pump assembly, and the liquid tank. This improves the device's manageability.

In some aspects, the water intake can also be ensured by drawing via suction from a general water source due to the suction generated in the compression chambers of the pump unit. Thanks to this it is merely necessary for a container of water to be in the vicinity in order to use the device.

In some aspects by the rotation of the lance it is possible to select the geometry of the output jet among one of: rotating conical jet high-pressure nozzle, narrow angle high-pressure nozzle, fan jet high-pressure nozzle, fan jet low-pressure nozzle. This allows the device to feature multiple operational modes, while maintaining a compact and manageable form.

### BRIEF DESCRIPTION OF THE FIGURES

The present invention will be clarified below via the description of some of its embodiments represented in the annexed drawings. It should nevertheless be noted that the present invention is not limited to the embodiments represented in the drawings; on the contrary, all variants or modifications of the embodiments represented and described herein which would appear clear, immediate and obvious to those in the field fall within the scope of the present invention. In particular, in the annexed drawings:
- Figure 1A illustrates a side view of a pressure washer according to the state of the art; figure 1B illustrates a section view of the pressure washer shown in figure 1A;
- Figures 2A-2C provide a schematic illustration of, respectively, a side view of devices for discharging a pressurised liquid;
- Figures 2D and 2E provide a schematic illustration of, respectively, a side view and a top view of devices for discharging a pressurised liquid;
- Figures 2F-2H provide a schematic illustration of, respectively, a side view of devices for discharging a pressurised liquid;
- Figure 3A provides a schematic illustration of a section view of parts of a pump of a device for discharging a pressurised liquid; figures 3B and 3E provide a schematic illustration of section views of the pump illustrated in figure 3A;
- Figures 4 and 5 provide a schematic illustration of a section view of parts of a pump of a device for discharging a pressurised liquid;
- Figure 6A provides a schematic illustration of a section view of parts of a pump and a motor of a device for discharging a pressurised liquid; figure 6B provides a schematic illustration of a section view of the connection of the parts of the pump and motor illustrated in figure 6A;
- Figures 7A and 7B provide a schematic illustration of a section view of the alignment and/or positioning and/or locking devices of the connection between the parts of a pump and a motor for a device for discharging a pressurised liquid;
- Figure 8 provides a schematic illustration of a section view of parts of a device for discharging a pressurised liquid, with an integrated motor;
- Figure 9 provides a schematic illustration of a section view of parts of a device for discharging a pressurised liquid, with a motor control device and/or an integrated handle;
- Figure 10A provides a schematic illustration of a section view of parts of a discharge lance of a device for discharging a pressurised liquid;
- Figures 10B and 10C provide a schematic illustration of a section view of parts of a discharge check valve of a device for discharging a pressurised liquid, according to an embodiment of the present invention;
- Figure 11 provides a schematic illustration of a section view of parts of an additional tank of a device for discharging a pressurised liquid;
- Figures 12 and 13 provide a schematic illustration of section views of parts of mixing control devices for the additional tank illustrated in figure 11;
- Figure 14A provides a schematic illustration of a section view of parts of a configurable discharge lance of a device for discharging a pressurised liquid; figures 14B and 14C provide a schematic illustration of section views of the parts of the discharge lance illustrated in figure 14A;
- Figures 15A and 15B provide a schematic illustration of two section views of a device for discharging a pressurised liquid;
- Figures 16A and 16B provide a schematic illustration of simplified three-dimensional exploded views of a device for discharging a pressurised liquid;
- Figure 17 provides a schematic illustration of a possible operating scheme of a device for discharging a pressurised liquid.

### DETAILED DESCRIPTION OF THE INVENTION

Devices for discharging a pressurised liquid shall now be discussed, with reference to the figures, in which the same reference numbers refer to the same elements. It shall nevertheless be clear that the present invention is not limited to the embodiments illustrated and/or described below. Each embodiment defined by the claims shall be considered part of the present invention.

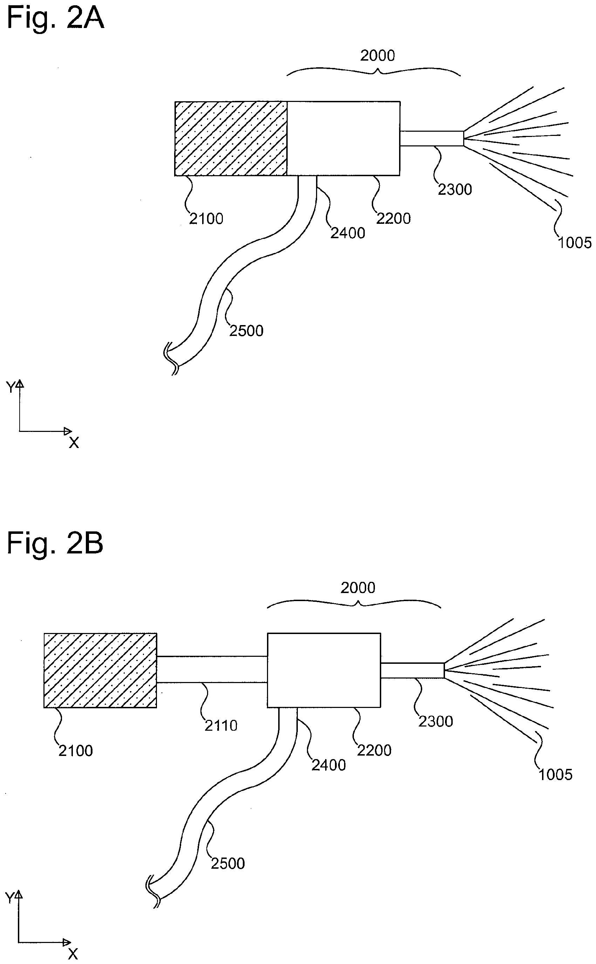

Figure 2A provides a schematic illustration of a side view of a device for discharging a pressurised liquid 2000.

The device for discharging a pressurised liquid 2000 comprises a liquid intake section 2400, a liquid discharge lance 2300 and a pump 2200. The device 2000 can be connected to a motor 2100. In the illustrated embodiment, the motor 2100 is present and connected to the pump 2200; it shall nevertheless be clear that the present invention may also be implemented without the motor 2100, simply with the provision for the device 2000 to be connected to a motor 2100. Embodiments with integrated motor 2100 or with a motor 2100 which can be connected and/or disconnected shall be described below.

The device 2000 has an inlet connected to the intake section 2400 and an outlet connected to the discharge lance 2300. In this manner, the device 2000 is able to pressurise a liquid taken in by the intake section 2400 and discharge it from the discharge lance 2300, creating a jet 1005. As can be seen in the figure, the discharge lance 2300 and the pump 2200 are connected in a substantially solid manner.

A substantially solid manner shall mean, in some embodiments, a connection with only rotational degrees of freedom, specifically a maximum of three rotational degrees of freedom, preferably a maximum of two rotational degrees of freedom, and ideally a maximum of one rotational degree of freedom.

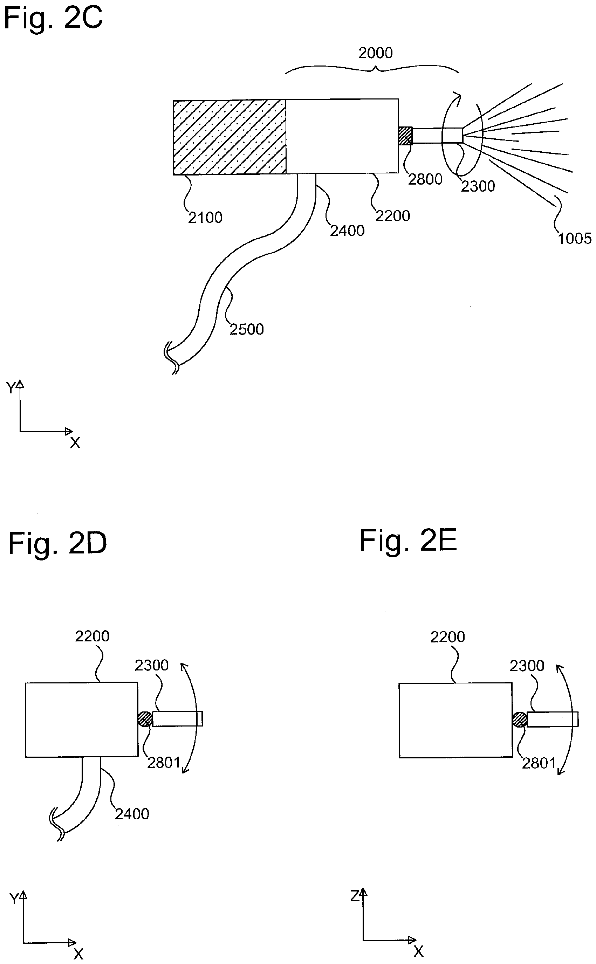

A connection with a maximum of one rotational degree of freedom is illustrated as an example in figure 2C. Specifically, a rotating joint 2800 allows the lance 2300 to rotate around its longitudinal axis with respect to the pump body 2200, as shown schematically by the arrow. Alternatively, or in addition, a connection with a maximum of one rotational degree of freedom is illustrated as an example in figure 2C. Specifically, a spherical joint 2801 allows the lance 2300 to rotate around the Z axis, as shown schematically by the arrow, possibly within a predefined angle. Alternatively, or in addition, a connection with a maximum of one rotational degree of freedom is illustrated as an example in figure 2D. Specifically, a spherical joint 2801 allows the lance 2300 to rotate around the Y axis, as shown schematically by the arrow, possibly within a predefined angle.

Alternatively, or in addition, a connection with a maximum of two rotational degrees of freedom is illustrated as an example in figures 2D and 2E. Specifically, the spherical joint allows rotation both around the Y and Z axes. In this manner the discharge lance 2300 can be oriented in the required direction, within a spherical range limited by a predefined angle, while still keeping the pump and lance joined together in a substantially solid manner. The predefined angle may be between -45° and 45°, preferably between -30° and 30°, and still more preferably between -15° and 15°, with respect to the axis of longitudinal extension of the device 2000, corresponding to the X axis in the figure.

Alternatively, or in addition, a connection with a maximum of two or three degrees of rotational freedom may be obtained by combining one or more of the previously described embodiments.

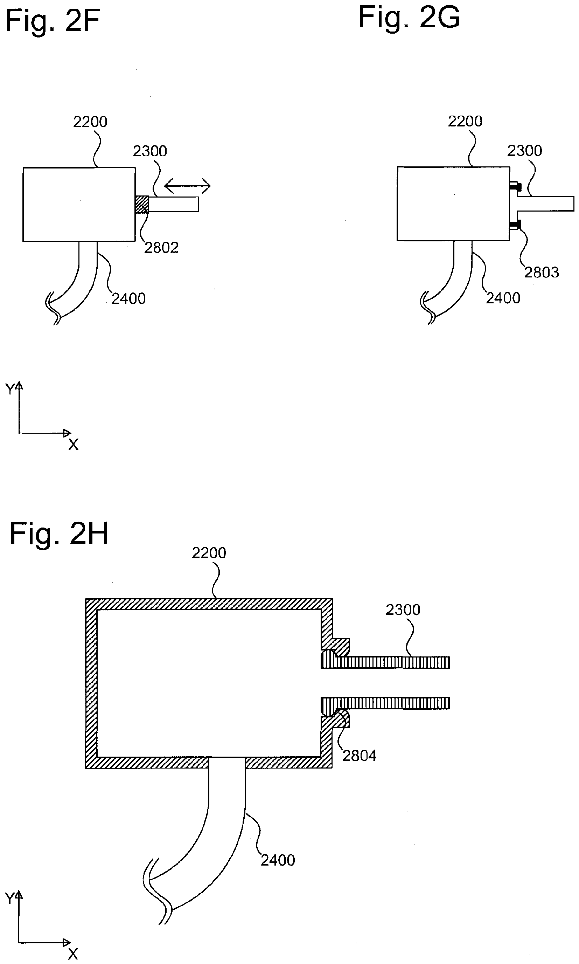

Alternatively, or in addition, in some embodiments a substantially solid manner may mean a connection with a maximum of one degree of translational freedom, specifically along the axis of extension of the lance 2300, such as to allow the lance to possibly retract, at least partially, inside the pump body. This connection is illustrated in figure 2F, where the sliding joint 2802 allows the lance 2300 to perform a translational motion along its longitudinal axis with respect to the pump body 2200, as shown schematically by the arrow. This type of connection may be combined with the connections with one, two, or three degrees of rotational freedom described above.

The connections described differ from the flexible hose typical of prior art. Indeed, while permitting a certain amount of movement between the lance 2300 and the pump 2200, they allow portable use of the device 2000, for example with one hand on the pump 2200 and one on the lance 2300. The hose, on the contrary, makes a connection which has various translational degrees of freedom, which makes portable use of known devices inconvenient or impossible.

Alternatively, or in addition, in other embodiments, a substantially solid manner may also be taken to mean a fixed connection between the lance and pump which prevents movement of the discharge lance 2300 with respect to the pump 2200. In other words, a connection with zero degrees of rotational and translational freedom. For example a connection fastened by retaining elements 2803, as illustrated in figure 2G, for example screws and/or adhesive and/or welds and/or bolts and/or rivets between the body of the pump 2200 and the body of the lance 2300. As another alternative, or in addition, an interlocking connection 2804 between the two bodies, illustrated schematically in figure 2H, can create a connection with zero degrees of rotational and translational freedom.

Alternatively, or in addition, in some embodiments, each connection in which the lance 2300 and the pump 2200 are not connected by a long hose, as is the case for prior art, may be considered a substantially solid manner, in contrast to the completely flexible connection offered by the long hose 1003 used to connect the lance 1004 to the body 1001 of the pressure washer which represents the state of the art.

Figure 2B provides a schematic illustration of a side view of a device for discharging a pressurised liquid 2000.

Specifically, the device in figure 2B differs from that in figure 2A due to the presence of a transmission 2110 between the device 2000 and the motor 2100. The transmission may be of any type, for example a universal joint, via a rotating axle, chain, belt, reduction unit etc. In general, any mechanical transmission allowing power to be transferred from the motor 2100 to the pump 2200 may be implemented.

As is visible, for example, in figures 2A and 2B, the liquid discharge device 2000 shown in the illustrated embodiments differs from the known device 1000 as there is not a flexible connection between the pump 2200 and lance 2300. On the contrary, these two elements are connected in a substantially solid manner, as previously described. In addition, in some embodiments a motor 2100 may be included in the device 2000, also connected in a substantially solid manner to the pump 2200, possibly via a transmission 2110.

Thanks to the embodiments described above, it is possible to implement a device for the discharge of a pressurised liquid comprising: a liquid intake section 2400, a liquid discharge lance 2300, a pump 2200, which can be connected to a motor 2100, the pump having an inlet connected to the intake section and an outlet connected to the discharge lance, where the discharge lance and the pump are connected by a connection 2800, 2801, 2802, 2803, 2804, with at most three rotational degrees of freedom and/or one translational degree of freedom.

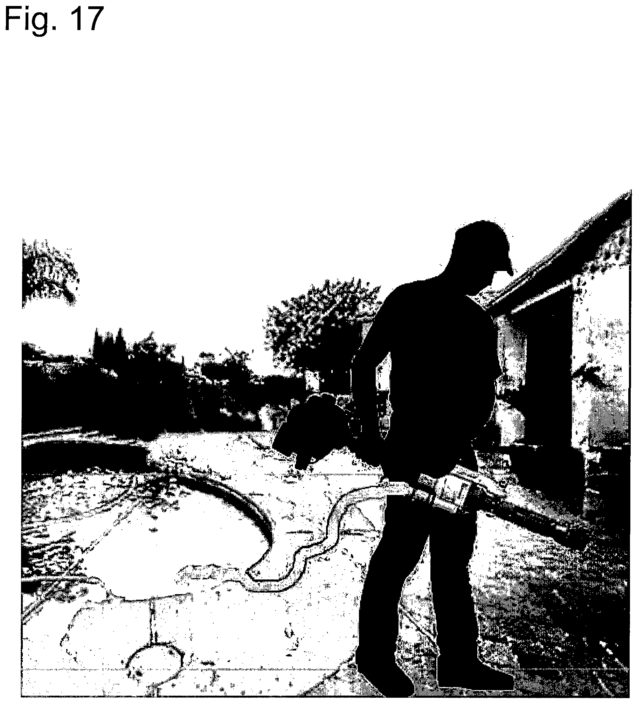

The liquid discharge device 2000 may therefore be handled as a single component by the user, for example by holding it in two hands. For example, a first and second grip may be provided by any one or two elements between the lance 2300, the pump 2200, the motor 2100 and/or the transmission 2110. As an example, figure 17 shows a grip with both hands on the transmission. As a further example, the user's left hand in figure 17 could grip the pump or the lance. Handles to facilitate the grip could be implemented on any one of the elements described, as described below. Alternatively, or in addition, a shoulder strap may be used to support the weight of the device 2000 while the handgrip is used to direct the device 2000, or the lance 2300 in the event that this is partially mobile with respect to the pump 2200.

Such use of the device 2000 for discharging liquids is even more advantageous if the size and weight are minimised. This result is obtained thanks to the presence of the intake section 2400. Specifically, the intake section 2400 allows the intake of the liquid discharged by the device 2000, for example water. More specifically, the section 2400 allows connection of a pipe 2500, which may be a flexible hose, the other end of which may then be connected to a liquid supply, for example a tap or container. In this manner the user does not need to carry the liquid container 1007 with him since the pipe 2500 allows the user to operate the device 2000 within a certain radius of the liquid source. It is therefore possible to create a device 2000 for discharging liquid without the presence of a tank 1007 for the liquid, which is, on the contrary, present in prior art. The device 2000 thus features particularly advantageous operation in comparison to such prior art. It is possible, for example, to have a device 2000 operating as a pressure washer/sprayer in proximity to any water source, for example a tap, a container, a swimming pool etc. With the motor 2100 specified as a battery-powered motor or internal combustion engine, the flexibility of use of the device 2000 is further increased. Activities such as cleaning a vehicle, cleaning the border of a swimming pool, irrigating and spraying garden beds, vegetable patches etc. will benefit from the ease of transport and/or use of the device 2000, thanks to the lack of the internal tank 1007 and thanks to the possibility to handle the device 2000 in an extremely flexible and manageable manner.

Furthermore, as illustrated, the pump, the lance and possibly the motor and/or part of a transmission 2110 nearest the pump in the device 2000 are positioned substantially along a single axis of the device, possibly the same axis as the extension of the lance 2300. This design lends particular manageability to the device 2000, since the compact nature and longitudinal extension of its structure allow a considerable reduction in weight and thus allow a greater degree of freedom in its movement during use. In some embodiments, the transmission may be flexible, for example in the case of a motor 2100 carried on the user's shoulder and connected by a flexible transmission 2110 to the pump 2200. In such embodiments, it will be sufficient for the end of the transmission 2110 on the pump 2200 side to be aligned with the pump 2200, and not the entire transmission 2110.

Specific embodiments for some components of the device 2000 are described below. It should be highlighted that such embodiments should be considered examples, and that alternative embodiments may be created. It shall also be clear that components from different embodiments may be combined.

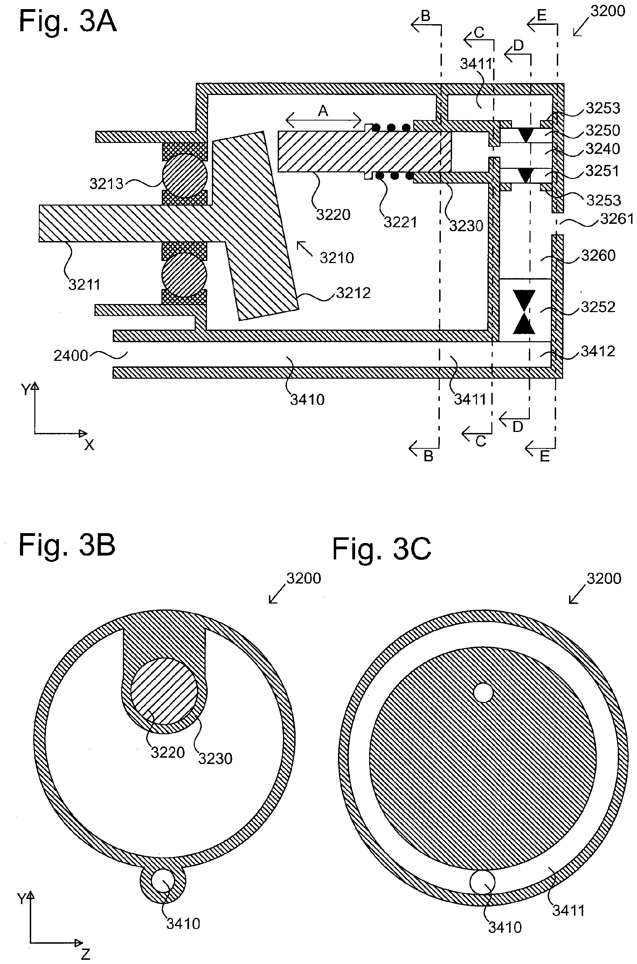

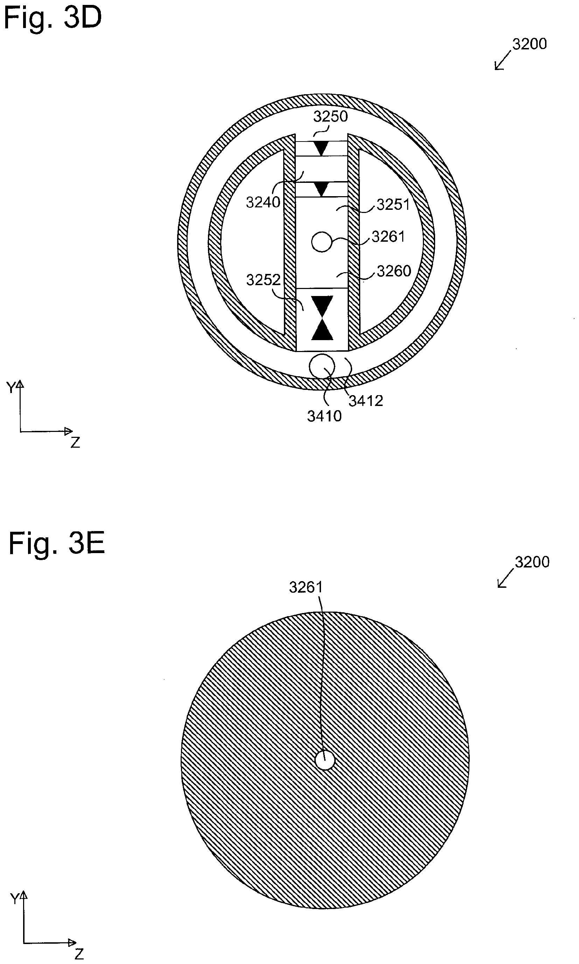

Figure 3A provides a schematic illustration of a section view of parts of a pump 3200 for a device for discharging a pressurised liquid 2000. Figures 3B-3E provide a schematic illustration of section views of the pump illustrated in figure 3A, taken along the ZY plane passing through the section lines B, C, D and E illustrated in figure 3A, respectively. The pump 3200 represents a possible embodiment of the pump 2200, with the advantages described below. It shall nevertheless be clear that, in some embodiments, any pump 2200 may be used.

The pump 3200 comprises a cam 3210, comprising an input shaft 3211 and having an inclined asymmetric plate 3212. As can be seen, as the input shaft 3211 rotates, the asymmetrical surface of the asymmetric inclined plate 3212 alternately and continuously interspaces the maximum and minimum thickness position of the plate 3212 itself. The rotation of the cam 3210 can be facilitated by the presence of bearings 3213. The alternating movement of the asymmetric inclined plate 3212 causes the piston 3220 to move along the X axis, as shown by the arrow A, inside a cylinder 3230. While the cam 3210 causes the movement in the positive X direction, the movement in the negative X direction can be ensured by an elastic element 3221, for example a spring. Alternatively, or in addition, the movement in the negative X direction can be obtained from the pressure of the liquid, in the event that the liquid is taken from a source which is under pressure, for example a tap.

Although not illustrated, the asymmetric inclined plate 3212 may have more than one section of minimum thickness and one of maximum thickness within a 360-degree arc. In this manner it will be possible to move the piston 3220 multiple times with a single rotation of the asymmetric inclined plate 3212, thus providing an advantageous reduction in the number of rotations required of the motor. In addition, or alternatively, in some embodiments, by introducing a plurality of sections of minimum and maximum thickness within the 360-degree arc, it will also be possible to make the piston smaller, as it will be actuated multiple times during a single rotation of the asymmetric inclined plate 3212, thus making the pump 3200 more compact.

The liquid from the intake section 2400 moves through an intake line 3410 until it reaches a distribution duct 3411, in which the liquid travels from the lower to the upper part of the pump 3200, as shown in figure 3C. The distribution duct 3411 extends to the outside of the pump body. This characteristic not only allows the liquid to be distributed from one side of the pump body to the other, but also provides uniform cooling of the pump body. In some embodiments, the dimension along the X axis of the distribution duct 3411 may be increased as required with respect to the illustrated embodiment, in order to provide an advantageous increase in cooling.

From the distribution duct 3411, the liquid then flows through an intake valve 3250 which may be, for example, a check valve, a mechanically or hydraulically controlled valve, or any type of valve which allows the entry of the liquid into the compression chamber 3240 during the intake phase and prevents it from coming out during the compression phase. Following the compression performed by the piston 3220, the liquid is pushed out of the compression chamber 3240 through an outlet valve 3251 which may be, for example, a check valve, a mechanically or hydraulically controlled valve, or any type of valve which allows the outlet of the liquid from the compression chamber 3240 during the compression phase and prevents it from coming in during the intake phase. Once it has exited the compression chamber 3240, the pressurised liquid finds itself in an outlet chamber 3260 with at least one outlet opening 3261 which allows the pressurised liquid to be transferred to the lance 2300, if necessary after passing through other elements which will be described below.

As can be seen in figure 3D, the valves 3250 and 3251 are radially positioned in the body of the pump 3200. This allows better management of the pressure generated in the compression chamber 3240. In general, as a matter of fact, as the two valves 3250, 3251 are arranged radially, the pressure exerted by the liquid on the valves 3250, 3251 tends to push the valves in a radial direction. If the valves were instead arranged longitudinally, along the X axis, for example, the thrust applied by the pressurised liquid would be along this direction. The fact that the thrust on the two valves 3250, 3251 is in the radial direction facilitates the construction of the pump. Specifically, this arrangement prevents the pressure on the valves pushing them in the direction of the lance 2300, which would require a particularly thick support surface between the pump and the lance in order to prevent deformation. On the contrary, with the two valves being pushed in a radial direction, the support surface of the valves 3250, 3251 can be provided by substantially radial ribs 3253 on which the valves 3250, 3251 rest. Alternatively, or in addition, the radial positioning of the valves 3250, 3251 allows the dimensions of the pump 3200 to be reduced, particularly in the X direction. Moreover, the radial positioning of the two valves allows a star configuration to be implemented when a plurality of pistons 3320 are used, in which the intake valves 3250 take on an advantageous radial positioning in connection with the ring formed by the distribution duct 3411, and/or the outlet valves 3251 take on an advantageous radial positioning in connection with the outlet chamber 3260.

In addition, in some embodiments, it will be possible to connect a safety valve 3252 to the outlet chamber 3260. In so doing, it is possible to ensure that, in the presence, for example, of blockages along the lance 2300, the pump 3200 is not blocked and/or excessive liquid pressure is avoided. The safety valve 3252, for example a check valve with opening pressure slightly greater than the maximum operating pressure of the pump, can discharge both outside the pump 3200 and, as shown, into a return line 3412 connected to the distribution duct 3411 and/or the intake line 3410.

Via the described pump 3200 it is possible to pressurise the liquid taken in by the intake section 2400. Specifically, it is both possible to increase the pressure of a liquid taken from, for example, a tap, and to pump and pressurise a liquid from a container which is not under pressure, for example a swimming pool, a tank etc.

The pump 3200 is particularly advantageous as it allows the use of rotational motion from the input shaft 3211, thus simplifying the coupling of the pump 3200 with a motor 2100, positioned substantially along the X direction with respect to the pump and/or as it provides an outlet to the liquid under pressure also substantially along the X axis with respect to the pump. In other words, the pump 3200 allows the lance 2300 and the motor 2100 to be connected in the same direction, such as to extend the device 2000 essentially along the X axis. Alternatively, or in addition, it is sufficient for the power take off on the motor 2100 to be essentially in line with the input shaft 3211, in order to facilitate coupling of the two elements. In some cases, for example, the motor 2100 could be carried on the operator's shoulder and the transmission to the device 2000 could be flexible.

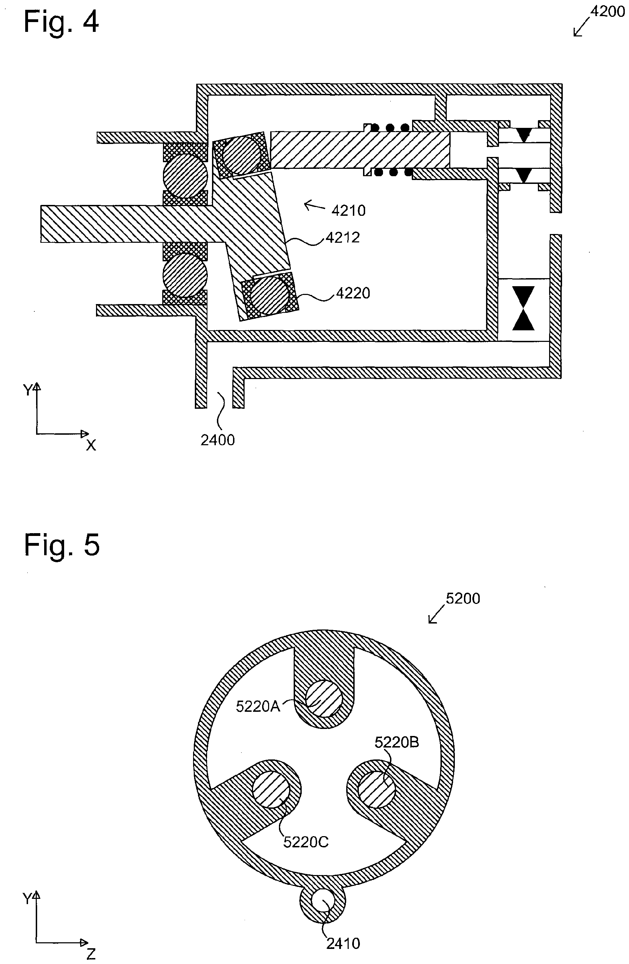

As previously described, any pump capable of pressurising a liquid present in or which can be drawn by the intake section 2400 via suction can be used to implement the pump 2200. Possible additions and/or alternatives to the pump 3200 are, for example, illustrated in figures 4 and 5.

Figure 4 provides a schematic illustration of a section view of parts of a pump 4200. The pump 4200 differs from the pump 3200 in the cam 4210 which replaces the cam 3210. The cam 4210 differs specifically due to the presence of a rolling element 4220, for example a bearing or rollers, in the region of the asymmetric inclined plate 4212 in contact with the piston 3200. In this manner it is possible to reduce operational frictions. Alternatively, or in addition, it will be possible to apply the rolling element 4220 to the piston 3220. This latter solution is particularly advantageous in the event that the asymmetric inclined plate 4212 does not have a flat surface, for example in the presence of a plurality of sections of minimum thickness and sections of maximum thickness within the 360-degree arc.

Figure 5 provides a schematic illustration of a section view of parts of a pump 5200. The pump 5200 differs from the pump 3200 due to the presence of three pistons 5220A-C instead of a single piston 3220. The number of pistons, three in the example, which can be implemented is not limited. It shall also be clear that the characteristics of the pumps 3200 and/or 4200 and/or 5200 may, in some embodiments, be combined.

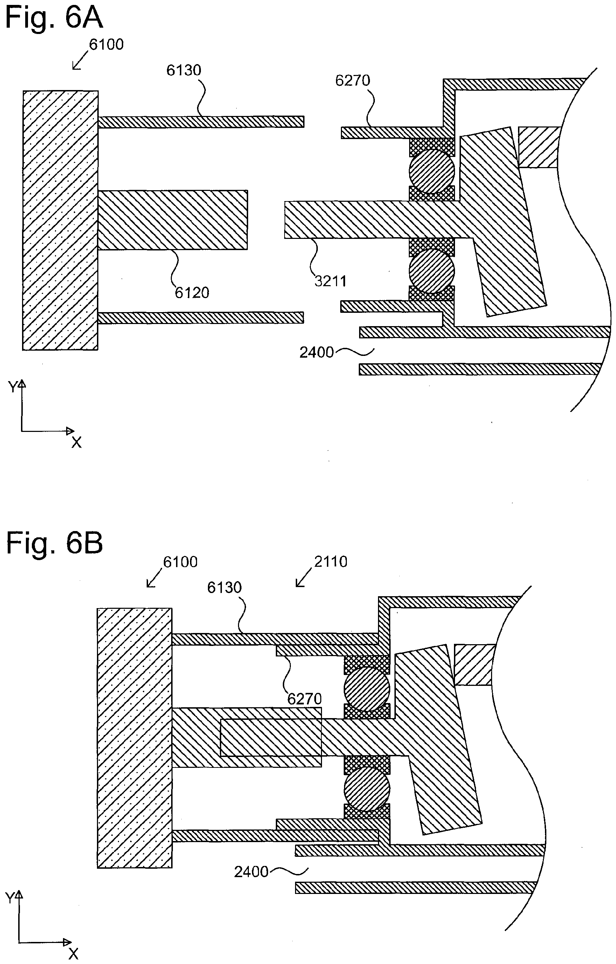

Figure 6A provides a schematic illustration of a section view of parts of a device 2000 and a motor 2100 for discharging a pressurised liquid. As can be seen in the figure, the device 2000 has a pump body 6270 open on the side of the input shaft 3211. The motor 6100, which represents a possible embodiment of the motor 2100, has an output shaft 6120 and a motor body 6130 open on the side of the output shaft 6120. In this manner the device 2000 and the motor 6100 can be connected, as shown in figure 6B, or disconnected, as illustrated in figure 6A, by coupling and decoupling the motor body 6130 and the pump body 6270, resulting in coupling and decoupling of the output shaft 6120 and input shaft 3211. The input and output shafts 6120, 3211, may be shaped in various manners, with complementary shapes, in order to allow transmission of power from the motor 2100 to the pump 2200.

The coupling and decoupling described allow, for example, a motor or engine for multiple gardening tools to be used as the motor 6100, for example the motor for a chainsaw, a string trimmer, a leaf blower, or other gardening/DIY tools. More generally, the coupling and decoupling described allow the connection of any motor able to be connected to the pump body and transmit power to the input shaft. This makes the device 2000 particularly low cost, as it can be manufactured and sold without a dedicated motor, as part of a set of DIY/gardening tools which share a single electric motor or internal-combustion engine.

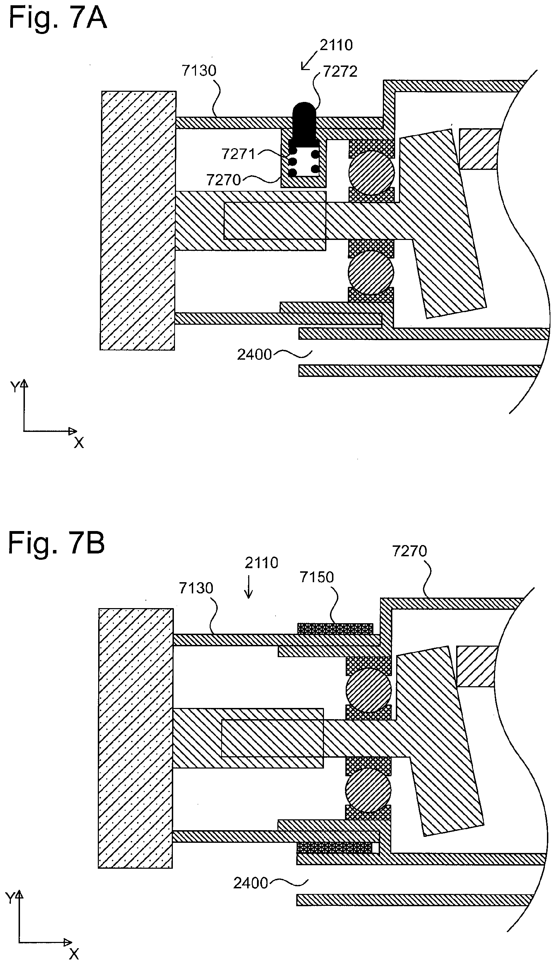

To avoid accidental uncoupling of the motor body 6130 from the pump body 6270, various locking systems are available, two of which are shown as an example in figures 7A and 7B. Specifically, figures 7A and 7B provide a schematic illustration of a section view of parts of devices for locking the connection between the pump and the motor of a device for discharging a pressurised liquid. Figure 7A provides a schematic illustration of a device for aligning and/or positioning and/or locking 7272, for example a button, held in position by an elastic device 7271, for example a spring. The locking device is solidly affixed to the pump body 7270 and extends through a dedicated hole in the engine body 7130, or vice versa. In this manner it is possible to ensure that the coupling of the pump body 7270 and the motor body 7130 is locked. In addition, or alternatively, a locking device 7150, for example a ring positioned around the outermost of the motor body and pump body 7130, 7270, allows the locking device to be squeezed tight, for example via a screw (not shown), preventing the two bodies from sliding against each other due to the friction generated by the locking device 7150. These embodiments shall be considered non-binding examples of how a reliable coupling between the motor 2100 and device 2000 can be obtained, in the event that the motor can be coupled to and uncoupled from the device 2000 for discharging pressurised liquid.

In the two examples illustrated, the parts of the motor body 7130 and the pump body 7270 which are joined together represent a possible embodiment of the transmission 2110. It shall also be clear that the transmission 2110, in some embodiments, may advantageously be longer than that illustrated, particularly along the X axis, thus moving the motor 2100 away from the device 2000.

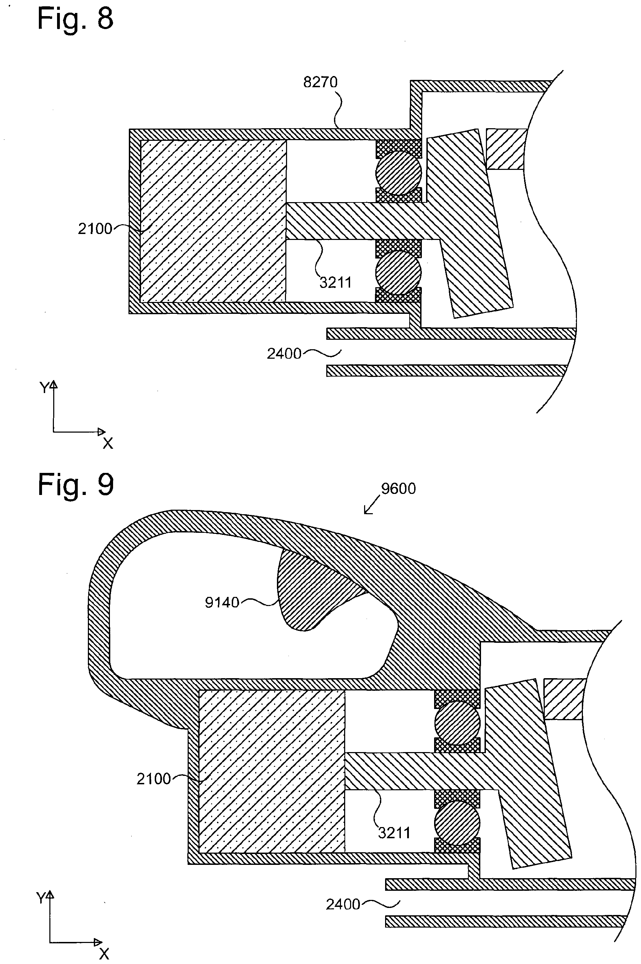

In some embodiments, the motor 2100 may be an integral part of the device 2000 for discharging a pressurised liquid, as illustrated for example in figure 8 where the motor 2100 is enclosed inside the pump body 8270.

In both cases, whether the motor 2100 can or cannot be separated from the device 2000, it is possible to include a motor control device 9140 in the device 2000, in the motor 2100 or in the transmission 2210, as illustrated schematically in figure 9. This allows the discharge power of the liquid to be controlled, from a minimum value, which can even be zero, to a maximum value, by directly controlling the motor power. This solution provides various advantages. Firstly, the motor does not operate when pressure is not requested, reducing power consumption. In addition, there is no risk of leaks due to internal liquid pressure which cannot find an outlet. Furthermore, while the modulation of a liquid under pressure is generally difficult to control, and requires a certain pressure on the modulation device by the user, the operation of a motor control device 9140, for example a potentiometer connected to a button, or else a throttle control for an internal combustion engine, does not require any effort and can be easily modulated. It should be clear that, in the case of a motor 2100 which can be decoupled from the device 2000, it will be possible to implement the control device 9140 on the device 2000 and/or on the motor 2100, where necessary by providing for an electrical or mechanical connection between the device 2000 and the motor 2100 to transfer the control movement and/or signal. In other embodiments, it will be possible to directly modulate the discharge of the liquid. Despite the disadvantages listed above, this solution has the advantage of being easier and more economical to implement.

In figure 9, a handle 9600 in addition or in alternative is illustrated which facilitates the grip on the device 2000. For example, the device could be gripped with one hand on the handle 9600 and one hand on the lance 2300, or on a handle (not shown) installed in the area of the lance 2300.

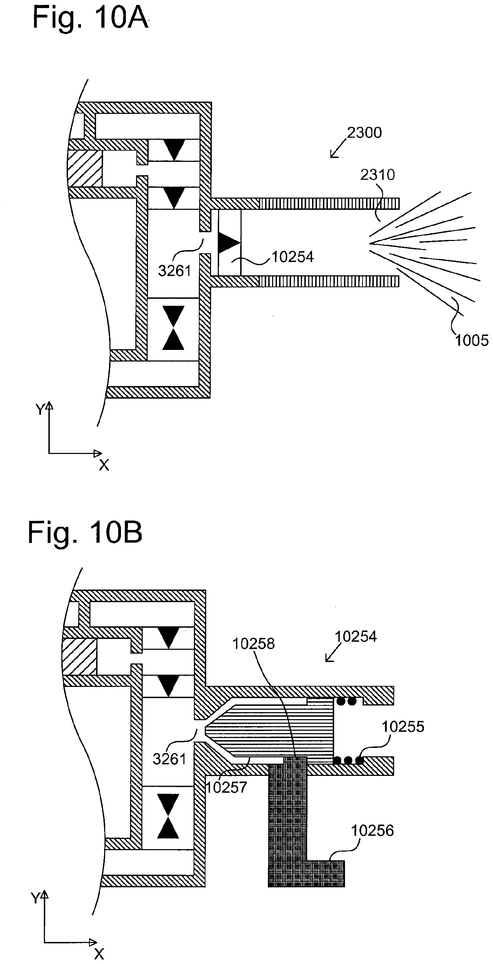

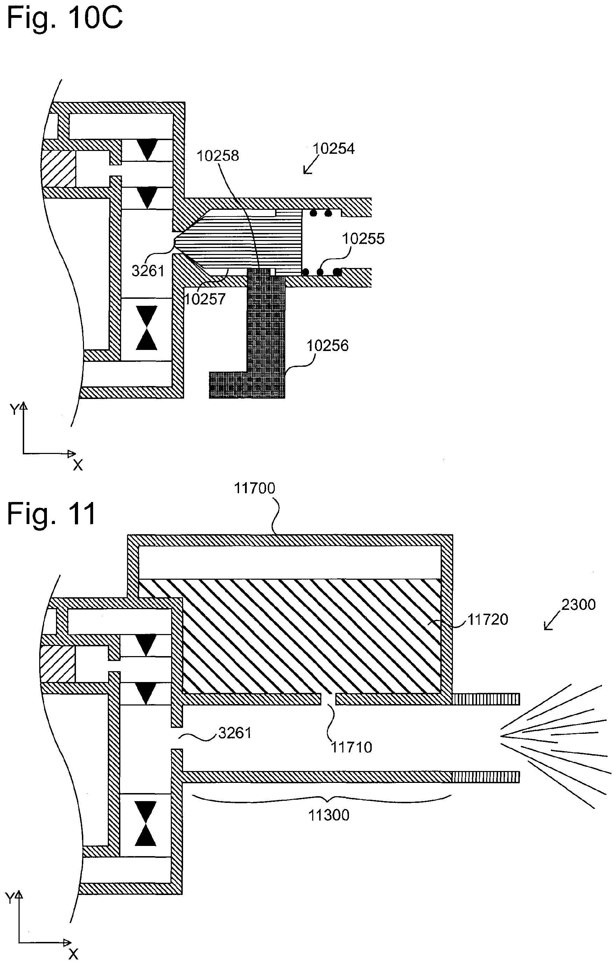

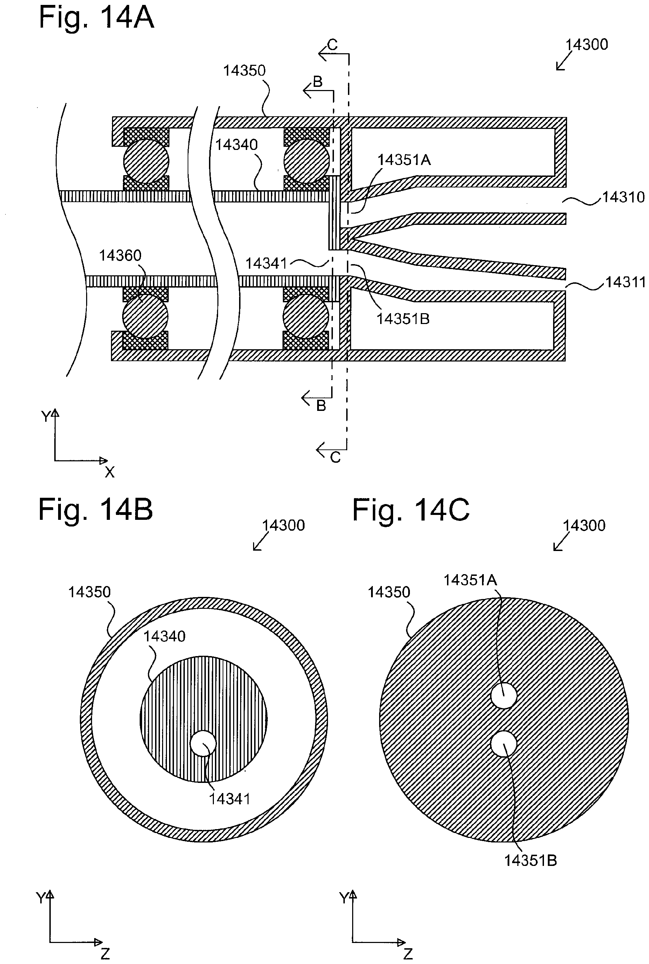

After the liquid has been pressurised, it can be discharged directly by a lance 2300, or it can pass through a mixing section and/or an outlet check valve. These elements shall be described with reference to figures 10 and 14.

Specifically, figure 10A illustrates a schematic section view of parts of a discharge lance 2300 comprising a discharge nozzle 2310. The lance 2300 is essentially a tubular element with one end connected to the outlet 3261 of the pump 3200 and the other end holding the discharge nozzle 2310. The extension along the X axis allows the jet 1005 to be oriented. The specific form of the nozzle 2310 allows the form of the jet 1005 to be controlled, in a manner known from prior art.

As shown in figure 10A, an outlet check valve 10254 is inserted downline of the outlet opening 3261. The outlet check valve 10254 is normally closed and has an opening pressure greater than that of a pressurised liquid supply, for example from a tap, for example of 3 or 4 bar. When the device is connected to a pressurised source, a pressure increase can be obtained from the pump 2200, which therefore opens the outlet check valve 10254. On the contrary, when the pump 2200 is not operating, the pressure of the supply will not be enough to open the outlet check valve 10254, thus preventing the simple pressure of the liquid supply causing it to flow out uncontrolled from the lance 2300. In some embodiments of the invention the outlet check valve 10254 described above may also be used instead of the outlet valve 3251.

According to the invention, illustrated in figures 10B and 10C, the outlet check valve 10254 has different operating positions, which can be set via a control lever 10256. Specifically, when the control lever is in the position shown in figure 10B, an eccentric element 10258 positioned on its upper edge acts on a shutter 10257, pushing it in the positive direction of the X axis against the force exerted by the elastic device 10255, for example a spring. In this position, valve 10254 is open. This configuration can be used, for example, in liquid suction mode, in which the liquid supply is not under pressure. In this mode there are no losses of power and reactivity due to the necessary opening of the pump. Furthermore, in this mode it is also possible to discharge liquids at low pressure. Finally, opening of the valve 10254 makes it possible for the pump to draw liquid via suction. As illustrated in figure 10C, if the lever 10256 is moved in the opposite direction, the eccentric element 10258 allows the shutter 10257 to move in the negative direction along the X axis, under the thrust provided by the elastic element 10255. In this position the valve 10254 is closed and held in position by the elastic element 10255. This configuration can, for example, be used in the case that the liquid supply is taken from a pressurised source. In this case, the thrust of the elastic element 10255 may be calibrated to prevent the liquid from opening the valve under the pressure provided by the source, but to allow the liquid to open the valve under the pressure provided by the pump 2200. In this manner, an undesired outflow of the liquid is prevented when the user does not operate the pump 2200. Although the valve 10254 has been shown as operated by a lever 10256 and an eccentric element 10258, it should be clarified that other examples making use of, for example, levers cams, thrust screws and so on may be used as an alternative.

In the example shown in figure 10A, the lance 2300 is directly connected to the outlet of the pump 2200, possibly via the outlet check valve 10254. In other embodiments, the lance 2300 may be installed downline of a mixing section 11300, 12300, 13300, which may be incorporated in the body of the pump 2200, as described below. Although not illustrated, for clarity it should be specified that the outlet check valve 10254 may be incorporated in any described embodiment, in particular upline or downline of the mixing section. In these embodiments it shall therefore be understood that the connection between the pump 2200 and the lance 2300, made in a substantially solid manner, is downline of the mixing section and/or the outlet check valve 10254.

The mixing section 11300 in figure 11 comprises a mixing hole 11710, communicating with a liquid 11720 contained in a tank 11700. The liquid 11720 is not the liquid pressurised by the device 2000. For example, the liquid pressurised by the device 2000 may be water, while the liquid 11720 may be a detergent, in the case of a pressure washer, or a fertiliser in the case of a sprayer, or more generally a liquid for use with plants, for example a weedkiller or fertiliser. The mixing hole 11710 allows the pressurised liquid, for example water, to be mixed with the liquid 11720 inside the mixing section 11300.

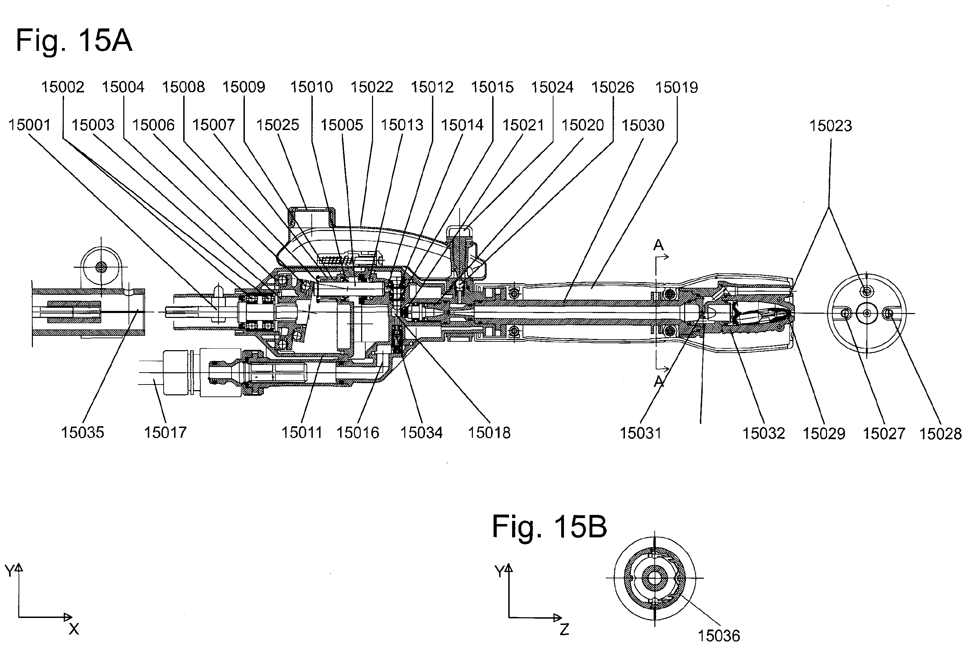

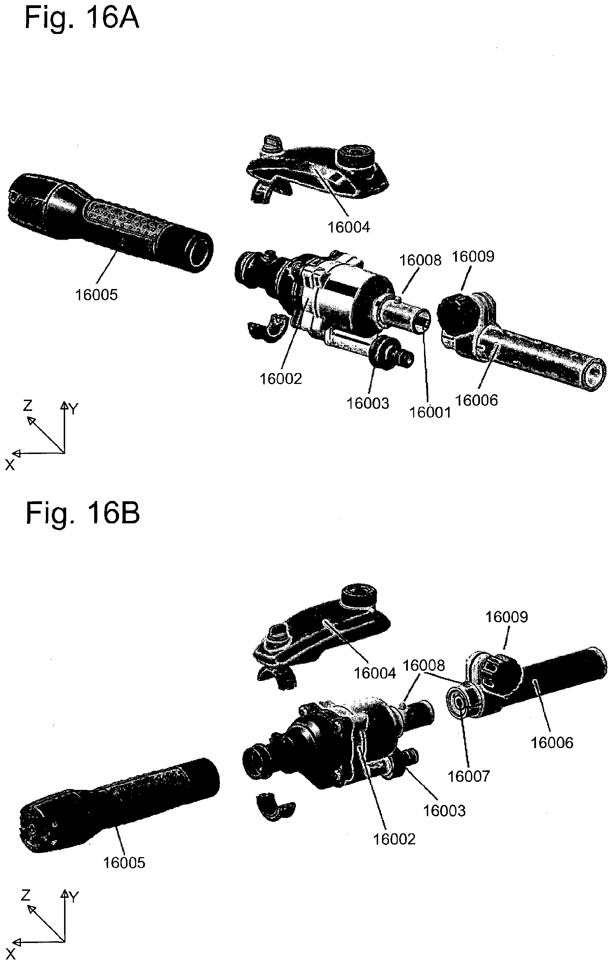

The tank 11700 may be positioned substantially above the mixing section 11300, as illustrated, and/or above the entire pump 2200 as shown for example in figure 15, and/or above the lance 2300. This flexibility of positioning allows the weight of the device 2000 to be balanced. In other embodiments, the tank 11700 may be positioned anywhere in the device 2000 and may be connected to the mixing hole 11710 via a dedicated line. Moreover, as illustrated, the tank 11700 may be structurally integrated in the pump body, or it may be an element which can be separated and connected to the pump body, as shown for example in figure 16.

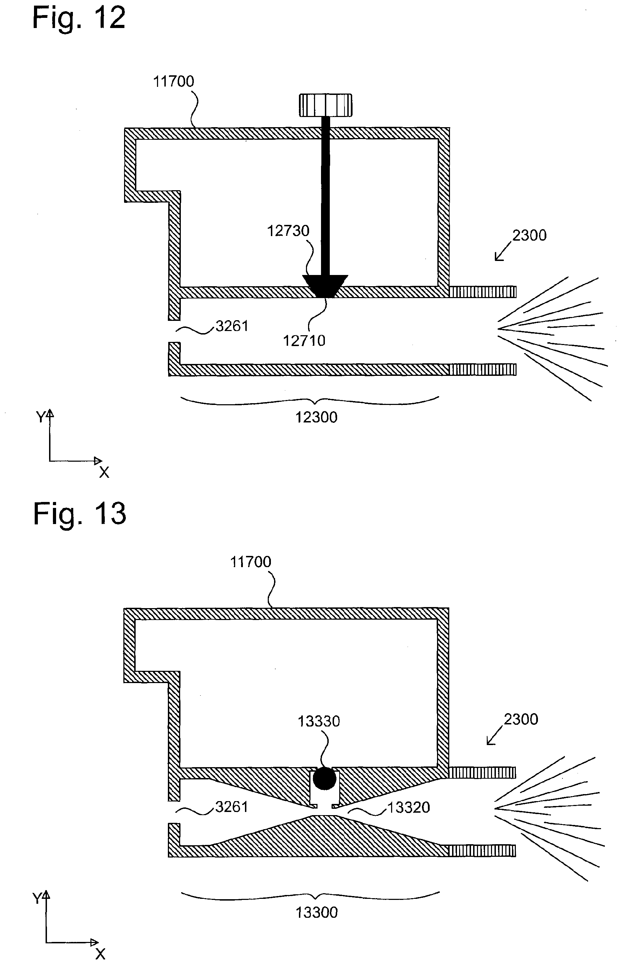

The mixing section 12300 in figure 12 differs from the mixing section 11300 in that the mixing hole 12710 is shaped in such a way as to work in tandem with a mixing control device 12730. In the illustrated embodiment, the mixing control device is a pin control with a substantially conical section, which can be inserted inside the hole 12710 to a controlled depth on the basis of the movement provided by the rotation of a threaded knob or similar. In this manner it is possible to control the quantity of liquid 11720, from zero to maximum, mixed with the pressurised outlet liquid.

In the two embodiments of the mixing section 11300, 12300, the mixing occurs by simple gravity feed of the liquid 11720 through the hole 11710, 12710. This operation is possible in the case that the pressure inside the mixing section 11300, 12300 is not too high, for example in the case that the device 2000 is used as a low-pressure sprayer. In high-pressure situations, however, the mixing is prevented by the tendency of the pressurised liquid to enter the tank 11700. Figure 13 provides a schematic illustration of a solution which allows mixing even in the case of high-pressure discharge.

Specifically, the mixing section 13300 illustrated in figure 13 differs from the mixing section 12300 due to the presence of a Venturi tube 13320. The narrowing of the Venturi tube causes a localised pressure drop at the mixing hole, which allows the liquid 11720 to be mixed even in the presence of high pressure in the mixing section 13300. In other embodiments, given that the mixing is performed by the effect of the pressure drop generated by the Venturi tube 13320, it will be possible to position the tank 11700 below the mixing section 13300 as well. In addition, in some embodiments, the mixing section 13300 may include a valve 13330. The valve 13330 is illustrated schematically in the figure as a ball valve, possibly held in position by an elastic element; in any case, all embodiments of a check valve for the liquid 11720 will be possible. In the presence of the valve 13330, the mixing section 13300 will allow mixing of the liquid 11720 in low-pressure mode, for example for low-pressure washing in pressure-washer mode. When switched to high-pressure mode, valve 13330 closes, blocking mixing and preventing entry of the pressurised liquid into the tank 11700. It will also be possible to implement a mixing hole without any non-return valve.

As previously described, the mixing sections 11300, 12300, 13300 will be advantageously incorporated in the body of the pump 2200. In possible variants of the present invention, in any case, the mixing sections 11300, 12300, 13300 may also be incorporated in the body of the lance 2300, where necessary by moving the tank 11700 onto the body of the lance 2300 and/or incorporating it in the same. As another alternative, the tank 11700 may be positioned on, or incorporated in, the body of the pump 2200 and connected via a hose to a mixing section 11300, 12300, 13300 implemented in the lance 2300, or vice versa. It should also be clarified that the lance 2300 in figures 10-13 is schematically illustrated as structurally connected to the body of the pump and/or the mixing section 11300, 12300, 13300. This representation is provided purely as an example, and the connection of the lance 2300 to these elements may be performed with screws, by interlocking coupling in a dedicated seat, or with joints, for example one of the unions 2800. 2801 described above.

Figure 14A illustrates a schematic section view of parts of a configurable discharge lance 14300 for a device 2000. Figures 14B and 14C illustrate schematic section views of the discharge lance shown in figure 14A according to the section lines B and C. The lance 14300 has a plurality of discharge nozzles 14310, 14311, for example a low-pressure nozzle 14310 and a high-pressure nozzle 14311. The choice of the various nozzles can be made by rotating a mobile part 14350, on which the nozzles are installed, against a fixed part 14340, connected to the pump 2200, as in the case of the lance 2300. In some optional embodiments, movement of the mobile part 14350 against the fixed part 14340 can be facilitated by one or more rotational elements 14360, for example bearings or simple rings, even solid ones. The fixed part contains an opening 14341 on the side of the pressurised liquid discharge, on which one of the openings 14351A, 14351B of the mobile part 14350 can be alternately positioned. In this manner it is possible to choose which discharge nozzle to use. The various discharge nozzles may have known forms for controlling the type of discharge required. In the illustrated embodiment, as an example, the high-pressure nozzle 14311 has a smaller discharge opening in comparison to the low-pressure nozzle 14310. In this manner, for example, it is possible to control the outlet pressure even with a pump able to operate only at a single speed.

It is then described how different embodiments can be performed and, where necessary, combined, in order to create a pressurised liquid discharge device 2000, for example a pressure washer and/or sprayer, with facilitated use and/or lower weight and/or lower cost.

As described, in some embodiments the device 2000 can be fitted with a mechanical device which can be adapted to external power generators such as, by way of non-limiting example, electric or petrol string trimmers, electric motors or internal combustion engines in general, or any type of power take off available, for example tractors, farm machinery etc. In addition, or as an alternative, in some embodiments the device may be equipped with a multi-way discharge lance, which it may be possible to select according to the required use. In addition, or as an alternative, in some embodiments the device may be equipped with a tank in which various types of substances such as detergents or various other chemical products can be held to be discharged by the lance together with the pressurised liquid (e.g. water). The supply of the liquid, for example water, can be assured, in the event of necessity, by drawing via suction from an available nearby water source, for example a generic irrigation channel or siphon, as shown in figure 17.

Further possible examples of the device 2000 shall be described in relation to figures 15-17. Specifically, figure 15A illustrates a schematic section view along the XY plane of a further possible example of the device 2000. Figure 15B illustrates a schematic section view along the ZY plane taken along the line A-A of figure 15A. Figures 16A and 16B illustrate simplified schematic three-dimensional exploded views of the main components of the device 15000. Figure 17 represents a possible operating scheme with the water supply drawn via suction by the device in figure 15 or figures 16A, 16B.

The device illustrated in figure 15 comprises a connection for the liquid (generally water) supply line, a pressure generator, possibly high pressure, and in some embodiments a liquid tank. The liquid tank may be firmly attached to the tank and/or a lance, possibly multi-way, from which a liquid jet used for the purpose of the device is discharged. As partly completed machinery, it is able to provide a very specific application simply by applying an external power source supplied, for example, by the motor of a string trimmer through the rotational motion of an element inside the stem appropriately fitted with a joint to house other partly completed machinery and provide other very specific applications.

Specifically, the device in figure 15 comprises, or is composed of, a main shaft 15001, similar to the input shaft 3211 which is connected to the power take off on the energy source 15035, which could be, for example, the output shaft 6120, mounted on bearings 15002, similar to the bearings 3213, rolling or sliding. This shaft 15001 is rigidly connected to an inclined disc rotor 15003, similar to the cam 3210, supported by an axial bearing 15004, rolling or sliding, with the function of transforming the rotary motion of the main shaft 15001 into linear motion of one or more pistons 15005, similar to the piston 3220.

These pistons 15005 are moved during the active phase by the inclined disc rotor 15003 via an axial bearing 15006, similar to the rolling element 4220, rolling or sliding, and during the return phase by springs 15007 connected to it via circlips 15008, where the springs 15007 and circlips 15008 perform a function similar to that of the elastic device 3221. The pistons 15005 are housed inside guides 15009, similar to the cylinder 3230, and slide on gaskets 15010 required to keep the lubricant inside the pump body 15011, similar to the pump body 6270, 7270 or 8270. Each piston 15005 acts in the compression chamber 15012, in which liquid leakage is prevented by gaskets 15013, and each of them is connected to a check valve 15014, similar to the intake valve 3250, which regulates the intake phase, and a check valve 15015, similar to the outlet valve 3251, which regulates the outlet phase. The intake check valve 15014 is connected to the intake circuit 15016, with a function similar to the ducts 3410 and 3411, to which the water supply line 15017, similar to the hose 2500, is connected from the mains water supply or a tank.

The outlet check valve 15015 is connected to the outlet circuit 15018, similar to the outlet chamber 3260, and to the four-function washing lance 15019, with operation similar to the lance 14300. During the intake phase, in other words the return of the pistons 15005 due to the effect of the springs 15007, the liquid enters the compression chamber 15012 through the intake check valves 15014. During the outlet phase, in other words the forward stroke of the pistons 15005 caused by the action of the inclined disc 15003 rotor 15001, the liquid is driven into the compression chamber 15012 and then enters the outlet circuit 15018 through the outlet check valves 15015. After entering the outlet circuit 15018, the liquid passes through a Venturi tube 15020, similar to the Venturi tube 13320, connected to the detergent or chemical additive tank 15022 similar to the tank 11700, possibly via a check valve 15026, similar to the valve 13330, which prevents water entering the tank 15022 when operating under high pressure, while allowing mixing in low-pressure operation.

By selecting the low-pressure nozzle 15023 on the washing lance 15019, the Venturi tube 15020 generates a pressure drop in the detergent tank 15022 which causes the detergent to mix with the wash liquid, in a quantity which can be regulated via the adjustment screw 15024 with a function similar to that of the mixing control device 12730. The detergent tank 15022 is fitted with a filler cap 15025 with a vent hole or check valve to allow it to equalise with atmospheric pressure and ensure a regular flow of the detergent or chemical additive.

Upline of the Venturi tube 15020 is an outlet check valve 15021, similar to the outlet check valve 10254, which prevents the leakage of water from the washing nozzles 15023, 15027, 15028, 15029 of the washing lance 15019 when connected to the mains water supply and the power supply is disconnected. Downline of the Venturi tube 15020 the water reaches the distributor disc 15031 via the central line 15030.

Rotating the washing lance 15019 connects one of the four ducts of the nozzles body 15032 via seal rings 15033. At the end of each of the ducts on the nozzles body 15032 the washing nozzles 15023, 15027, 15028, 15029 are attached; these have different characteristics, specifically the low-pressure fan jet nozzle 15023, similar to nozzle 14310, the high-pressure narrow-angle nozzle 15027, similar to nozzle 14311, the high-pressure fan jet nozzle 15028 and the rotating high-pressure nozzle with a conical jet 15029. The washing lance 15019 is fitted with a spring device 15036 able to recognise and correctly position the nozzles body 15032 with the ducts perfectly aligned with the distributor disc 15031. Connected between the outlet circuit 15018 and intake circuit 15016 is a safety valve 15034, similar to the safety valve 3252, to prevent any damage due to unexpected overpressures.

Moreover, an aspect can refer to an interchangeable device equipped with a high-pressure pump unit 16002, with a function similar to the pump 2200, water intake 16003, with a function similar to the intake section 2400, liquid tank 16004, with a function similar to the tank 11700, lance 16005, with a function similar to the lance 2300 and embodiment similar to the lance 14300 and/or the lance 15019, characterised in that it is equipped with a connection system comprising or composed of shaped shaft coupling 16001, similar to the end of the pump body 6270 on the motor side, and shaped hub 16007, with a function similar to the output shaft 6120, an anti-rotation positioning element 16008, with a function similar to the alignment and/or positioning and/or locking device 7272, a locking clamp 16009, with a function similar to the locking device 7150, which permits the coupling to a power generator of various type 16006, with a function similar to the motor 2100 or transmission 2110, transforming the whole assembly into a pressure washer and or (high-pressure) sprayer.

A further embodiment may refer to a device according to the previous embodiment, characterised by the fact that the multi-way lance has no flexible hose and is directly connected to a structure composed of a connection for the water line 16003, high-pressure generator 16002 and liquid tank 16004.

A further embodiment may refer to a device according to one of the two previous embodiments, characterised by the fact that the water supply 16003 may also be provided by drawing via suction from generally available water by the vacuum generated in the compression chamber of the pump assembly 16002.

A further embodiment may refer to a device according to one of the previous embodiments, characterised by the fact that its operation depends on a single fixed connection comprising only the water supply.

A further embodiment may refer to a device according to one of the previous embodiments, characterised by the fact that by rotating the lance 16005 it is possible to select the geometry of the outlet jet: rotating high-pressure conical jet nozzle 15029, high-pressure narrow angle nozzle 15027, high-pressure fan jet nozzle 15028, low-pressure fan jet nozzle 15023. The previous description generally makes reference to a motor 2100. The motor 2100 may be an electrical motor, an internal combustion engine, or any other kind of motor. In the case of an internal combustion engine, the elements schematically represented as the motor 2100 may include the engine itself and the fuel tank. In the same way, in the case of a battery-powered electric motor, the elements schematically represented as the motor 2100 may include both the motor and the battery.

While the present invention has been previously clarified by means of the detailed description of some of its embodiments represented in the drawings, the present invention is not limited to the embodiments described above and represented in the drawings; on the contrary, further variants of the embodiments described fall within the scope of the present invention as defined by the claims.

**List of reference numbers**

| | | | |
|---|---|---|---|
| 1000: | Pressure washer | 3261: | Outlet |
| 1001: | Body | 3410: | Intake line |
| 1002: | Wheels | 3411: | Distribution duct |
| 1003: | Flexible hose | 3412: | Return duct |
| 1004: | Lance | 4200: | Pump |
| 1005: | Jet | 4210: | Cam |
| 1006: | Motor-pump assembly | 4212: | Asymmetric inclined plate |
| 1007: | Liquid container | 4220: | Rolling element |
| 2000: | Device for the discharge of a pressurised liquid | 52000: | Pump |
| | | 5220A-C: | Piston |
| 2100: | Motor | 5200: | Pump |
| 2110: | Transmission | 5220A: | Piston |
| 2300: | Discharge lance | 5220B: | Piston |
| 2310: | Discharge nozzle | 5220C: | Piston |
| 2400: | Intake section | 6100: | Motor |
| 2500: | Flexible hose | 6120: | Output shaft |
| 2800: | Rotating joint | 6130: | Motor body |
| 2801: | Ball joint | 6270: | Pump body |
| 2802: | Sliding joint | 7270: | Pump body |
| 2803: | Fastening element | 7271: | Elastic device |
| 2804: | Interlocking coupling | 7272: | Alignment and/or positioning and/or locking device |
| 3200: | Pump | | |
| 3210: | Cam | 7150: | Locking device |
| 3211: | Input shaft | 8270: | Pump body |
| 3212: | Asymmetric inclined plate | 9140: | Motor control device |
| 3213: | Bearing | 9600: | Handle |
| 3220: | Piston | 10254: | Outlet check valve |
| 3221: | Elastic device | 10255: | Elastic device |
| 3230: | Cylinder | 10256: | Control lever |
| 3240: | Compression chamber | 10257: | Shutter |
| 3250: | Intake valve | 10258: | Eccentric element |
| 3251: | Outlet valve | 11300: | Mixing section |
| 3252: | Safety valve | 11700: | Tank |
| 3253: | Ribs | 11710: | Mixing hole |
| 3260: | Outlet chamber | 11720: | Liquid |
| 12300: | Mixing section | 15017: | Supply line |
| 12710: | Mixing hole | 15018: | Outlet circuit |
| 12730: | Mixing control device | 15019: | Washing lance |
| 13300: | Mixing section | 15020: | Venturi tube |
| 13320: | Venturi tube | 15021: | Outlet check valve |
| 13330: | Valve | 15022: | Detergent tank |
| 14300: | Discharge lance | 15023: | Fan jet low-pressure nozzle |
| 14310: | Low-pressure discharge nozzle | 15024: | Detergent adjustment screw |
| 14311: | High-pressure discharge nozzle | 15025: | Tank cap |
| 14340: | Fixed part | 15026: | Detergent tank check valve |
| 14341: | Fixed part opening | 15027: | Narrow angle high-pressure nozzle |
| 14350: | Mobile part | | |
| 14351A: | Mobile part opening | 15028: | Fan jet high-pressure nozzle |
| 14351B: | Mobile part opening | 15029: | Rotating conical jet high-pressure nozzle |
| 14360: | Rotational elements | | |
| 15001: | Main shaft | 15030: | Central Duct |
| 15002: | Bearings | 15031: | Distributor disc |
| 15003: | Inclined disc rotor | 15032: | Nozzles body |
| 15004: | Axial bearing | 15033: | Sealing ring |
| 15005: | Piston | 15034: | Safety valve |
| 15006: | Axial bearing | 15035: | Power take off |
| 15007: | Piston return springs | 15036: | Lance positioning spring |
| 15008: | Circlips | 16001: | Connection body |
| 15009: | Guide | 16002: | Pump assembly |
| 15010: | Lubrication gaskets | 16003: | Water intake |
| 15011: | Pump body | 16004: | Tank |
| 15012: | Compression chamber | 16005: | Lance |
| 15013: | Water gaskets | 16006: | External power take off |
| 15014: | Intake valve | 16007: | Shaped hub |
| 15015: | Outlet valve | 16008: | Anti-rotation positioning element |
| 15016: | Intake circuit | 16009: | Locking clamp |

## Claims

1. A device for the discharge of a pressurised liquid, comprising:
a liquid intake section (2400),
a liquid discharge lance (2300, 14300),
a pump (2200, 3200, 4200, 5200), which can be connected to a motor (2100, 6100), the pump (2200, 3200, 4200, 5200) having an inlet connected to an intake section and an outlet connected to the discharge lance (2300, 14300),
wherein the discharge lance (2300, 14300) and the pump (2200, 3200, 4200, 5200) are connected by a connection (2800, 2801, 2802, 2803, 2804) which has at the most three rotational degrees of freedom and/or one translational degree of freedom,
the device further comprising
an outlet check valve (10254) with a first position and a second position, wherein in the first position the outlet check valve (10254) is open, and wherein in the second position the outlet check valve (10254) can be opened if a pressure above a predetermined value is applied to its intake, and
**characterized by**
a control lever (10256), operable to set the outlet check valve (10254) in the first position or in the second position.

2. The device according to claim 1
wherein the connection (2800, 2801, 2802, 2803, 2804) comprises a rotating joint (2800) and/or a spherical joint (2801) and/or a sliding joint (2802).

3. The device according to claim 1 or 2
wherein the connection (2800, 2801, 2802, 2803, 2804) comprises fastening elements (2803), preferably screws and/or adhesive and/or welds and/or bolts and/or rivets and/or an interlocking coupling (2804).

4. The device according to any previous claim
wherein the pump (2200, 3200, 4200, 5200), the lance (2300, 14300) and possibly the motor (2100, 6100) and/or transmission (2110) component nearest the pump (2200, 3200, 4200, 5200) are positioned substantially along a single axis of the device.

5. The device according to any previous claim wherein the device does not include a container (1007) for the liquid, and
wherein the liquid intake section (2400) can be connected to a hose (2500).

6. The device according to any previous claim
wherein the motor (6100) comprises a motor body (6130),
wherein the pump (2200, 3200, 4200, 5200) comprises a pump body (6270), and
wherein the motor (6100) can be connected and/or removed from the pump (2200, 3200, 4200, 5200) by coupling and/or uncoupling it from the motor body (6130) and pump body (6270).

7. The device according to claim 6,
wherein the pump body (6270) and/or motor body (6130) comprises a locking device (7150, 7272) to prevent decoupling of the motor body (6130) from the pump body (6270).

8. The device according to any previous claim,
further comprising a motor control device (9140) to control the power supplied by the motor (2100, 6100).

9. The device according to any previous claim,
further comprising a tank (11700) for a second liquid, preferably a liquid detergent or liquid for application to plants.

10. The device according to claim 9
wherein, in the usage position, the tank (11700) is positioned at least partially above or below a mixing section (11300, 12300, 13300).

11. The device according to any of the preceding claims, further comprising a motor (2100, 6100).

12. The device according to claim 11
wherein the motor (2100, 6100) is a motor for multiple gardening tools, which can be separated from the pump (2200, 3200, 4200, 5200).

13. The device according to any of the preceding claims, further comprising a liquid distribution duct (8411) which extends on the periphery of the pump (2200, 3200, 4200, 5200).

14. The device according to any of the preceding claims, further comprising at least one intake valve (3250) and at least one outlet valve (3251), positioned radially in the pump (2200, 3200, 4200, 5200).

## Patentansprüche

1. Vorrichtung für den Ausstoß einer unter Druck stehenden Flüssigkeit, umfassend:
einen Flüssigkeitsaufnahmeabschnitt (2400),
eine Flüssigkeitsausstoßlanze (2300, 14300),
eine Pumpe (2200, 3200, 4200, 5200), welche mit einem Motor (2100, 6100) verbunden werden kann, wobei die Pumpe (2200, 3200, 4200, 5200) einen Einlass, welcher mit einem Aufnahmeabschnitt verbunden ist, und einen Auslass, welcher mit der Ausstoßlanze (2300, 14300) verbunden ist, aufweist,
wobei die Ausstoßlanze (2300, 14300) und die Pumpe (2200, 3200, 4200, 5200) durch eine Verbindung (2800, 2801, 2802, 2803, 2804) verbunden sind, welche höchstens drei Rotationsfreiheitsgrade und/oder einen translatorischen Freiheitsgrad aufweist,
wobei die Vorrichtung darüber hinaus umfasst
ein Auslass-Rückschlagventil (10254) mit einer ersten Stellung und einer zweiten Stellung, wobei das Auslass-Rückschlagventil (10254) in der ersten Stellung offen ist und wobei das Auslass-Rückschlagventil (10254) in der zweiten Stellung offen sein kann, wenn ein Druck über einem vorbestimmten Wert auf seine Aufnahme aufgebracht wird, und
**gekennzeichnet durch**
einen Steuerhebel (10256), welcher betriebsbereit ist, um das Auslass-Rückschlagventil (10254) in die erste Stellung oder in die zweite Stellung zu versetzen.

2. Vorrichtung nach Anspruch 1,
wobei die Verbindung (2800, 2801, 2802, 2803, 2804) ein Drehgelenk (2800) und/oder ein Kugelgelenk (2801) und/oder ein Gleitgelenk (2802) umfasst.

3. Vorrichtung nach Anspruch 1 oder 2,
wobei die Verbindung (2800, 2801, 2802, 2803, 2804) Befestigungselemente (2803), vorzugsweise Schrauben und/oder Haftmittel und/oder Schweißverbindungen und/oder Bolzen und/oder Niete und/oder eine formschlüssige Kupplung (2804) umfasst.

4. Vorrichtung nach einem der vorhergehenden Ansprüche,
wobei die Pumpe (2200, 3200, 4200, 5200), die Lanze (2300, 14300) und möglicherweise der Motor (2100, 6100) und/oder eine Übersetzungskomponente (2110) am nächsten an der Pumpe (2200, 3200, 4200, 5200) im Wesentlichen entlang einer einzigen Achse der Vorrichtung angeordnet sind.

5. Vorrichtung nach einem der vorhergehenden Ansprüche, wobei die Vorrichtung keinen Behälter (1007) für die Flüssigkeit aufweist, und
wobei der Flüssigkeitsaufnahmeabschnitt (2400) mit einem Schlauch (2500) verbunden werden kann.

6. Vorrichtung nach einem der vorhergehenden Ansprüche,
wobei der Motor (6100) einen Motorkörper (6130) umfasst,
wobei die Pumpe (2200, 3200, 4200, 5200) einen Pumpenkörper (6270) umfasst, und
wobei der Motor (6100) mit der Pumpe (2200, 3200, 4200, 5200) verbunden und/oder von dieser entfernt sein kann, indem der Motorkörper (6130) und der Pumpenkörper (6270) gekoppelt und/oder entkoppelt sind.

7. Vorrichtung nach Anspruch 6,
wobei der Pumpenkörper (6270) und/oder der Motorkörper (6130) eine Verriegelungsvorrichtung (7150, 7272) umfasst, um ein Entkoppeln des Motorkörpers (6130) von dem Pumpenkörper (6270) zu verhindern.

8. Vorrichtung nach einem der vorhergehenden Ansprüche,
darüber hinaus eine Motorsteuervorrichtung (9140) umfassend, um die Leistung, welche dem Motor (2100, 6100) zugeführt wird, zu steuern.

9. Vorrichtung nach einem der vorhergehenden Ansprüche,
darüber hinaus einen Tank (11700) für eine zweite Flüssigkeit umfassend, vorzugsweise eine Reinigungsflüssigkeit oder eine Flüssigkeit zur Anwendung bei Pflanzen.

10. Vorrichtung nach Anspruch 9,
wobei, in der Verbrauchsstellung, der Tank (11700) zumindest teilweise über oder unter einem Mischabschnitt (11300, 12300, 13300) angeordnet ist.

11. Vorrichtung nach einem der vorhergehenden Ansprüche, darüber hinaus einen Motor (2100, 6100) umfassend.

12. Vorrichtung nach Anspruch 11,
wobei der Motor (2100, 6100) ein Motor für mehrere Gartenwerkzeuge ist, welcher von der Pumpe (2200, 3200, 4200, 5200) getrennt werden kann.

13. Vorrichtung nach einem der vorhergehenden Ansprüche, darüber hinaus einen Flüssigkeitsverteilungskanal (8411) umfassend, welcher sich an dem Umfang der Pumpe (2200, 3200, 4200, 5200) erstreckt.

14. Vorrichtung nach einem der vorhergehenden Ansprüche, darüber hinaus mindestens ein Einlassventil (3250) und mindestens ein Auslassventil (3251) umfassend, welche radial in der Pumpe (2200, 3200, 4200, 5200) angeordnet sind.

## Revendications

1. Un dispositif pour la décharge d'un liquide sous pression, comprenant:
une section d'admission de liquide (2400),
une lance de décharge de liquide (2300, 14300),
une pompe (2200, 3200, 4200, 5200), qui peut être reliée à un moteur (2100, 6100), la pompe (2200, 3200, 4200, 5200) ayant une entrée reliée à une section d'aspiration et une sortie reliée à la lance de décharge (2300, 14300),
dans lequel la lance de décharge (2300, 14300) et la pompe (2200, 3200, 4200, 5200) sont reliées par un raccord (2800, 2801, 2802, 2803, 2804) qui présente au maximum trois degrés de liberté en rotation et/ou un degré de liberté en translation,
le dispositif comprenant en outre
un clapet anti-retour de sortie (10254) ayant une première position et une deuxième position, dans lequel dans la première position le clapet anti-retour de sortie (10254) est ouvert, et dans lequel dans la deuxième position le clapet anti-retour de sortie (10254) peut être ouvert si une pression supérieure à une valeur prédéterminée est appliquée à son entrée, et
**caractérisé par**
un levier de commande (10256), permettant de régler le clapet anti-retour de sortie (10254) dans la première position ou dans la deuxième position.

2. Le dispositif selon la revendication 1
dans lequel la connexion (2800, 2801, 2802, 2803, 2804) comprend une articulation rotative (2800) et/ou une articulation sphérique (2801) et/ou une articulation coulissante (2802).

3. Le dispositif selon la revendication 1 ou 2
dans lequel la connexion (2800, 2801, 2802, 2803, 2804) comprend des éléments de fixation (2803), de préférence des vis et/ou de la colle et/ou des soudures et/ou des boulons et/ou des rivets et/ou un accouplement à verrouillage (2804).

4. Le dispositif selon l'une quelconque des revendications antérieures
dans lequel la pompe (2200, 3200, 4200, 5200), la lance (2300, 14300) et éventuellement le moteur (2100, 6100) et/ou le composant de transmission (2110) plus proche de la pompe (2200, 3200, 4200, 5200) sont positionnés sensiblement le long d'un seul axe du dispositif.

5. Le dispositif selon l'une quelconque des revendications antérieures dans lequel le dispositif ne comprend pas de récipient (1007) pour le liquide, et
dans lequel la section d'admission de liquide (2400) peut être raccordée à un tuyau (2500).

6. Le dispositif selon l'une quelconque des revendications antérieures
dans lequel le moteur (6100) comprend un corps de moteur (6130),
dans lequel la pompe (2200, 3200, 4200, 5200) comprend un corps de pompe (6270), et
dans lequel le moteur (6100) peut être connecté et/ou retiré de la pompe (2200, 3200, 4200, 5200) en l'accouplant et/ou en le désaccouplant du corps du moteur (6130) et du corps de la pompe (6270).

7. Le dispositif selon la revendication 6,
dans lequel le corps de pompe (6270) et/ou le corps de moteur (6130) comprend un dispositif de verrouillage (7150, 7272) pour empêcher le découplage du corps du moteur (6130) du corps de la pompe (6270).

8. Le dispositif selon l'une quelconque des revendications antérieures,
comprenant en outre un dispositif de commande de moteur (9140) pour contrôler la puissance fournie par le moteur (2100, 6100).

9. Le dispositif selon l'une quelconque des revendications antérieures,
comprenant en outre un réservoir (11700) pour un second liquide, de préférence un détergent liquide ou un liquide à appliquer à des plantes.

10. Le dispositif selon la revendication 9
dans lequel, en position d'utilisation, le réservoir (11700) est placée au moins partiellement au-dessus ou au-dessous d'une section de mélange (11300, 12300, 13300).

11. Le dispositif selon l'une quelconque des revendications antérieures, comprenant en outre un moteur (2100, 6100).

12. Le dispositif selon la revendication 11
dans lequel le moteur (2100, 6100) est un moteur pour plusieurs outils de jardinage, qui peut être séparé de la pompe (2200, 3200, 4200, 5200).

13. Le dispositif selon l'une quelconque des revendications antérieures, comprenant en outre un conduit de distribution de liquide (8411) qui s'étend sur la périphérie de la pompe (2200, 3200, 4200, 5200).

14. Le dispositif selon l'une quelconque des revendications antérieures, comprenant en outre au moins une soupape d'admission (3250) et au moins une soupape de sortie (3251), positionnées radialement dans la pompe (2200, 3200, 4200, 5200).
